# EUROPÄISCHE PATENTSCHRIFT

(11) **EP 1 669 259 B1**
(45) Veröffentlichungstag und Bekanntmachung des Hinweises auf die Patenterteilung: **15.06.2011**
(21) Anmeldenummer: 04030498.2
(22) Anmeldetag: 22.12.2004
(51) Int. Cl.: B60R 21/26

(54) **Gasgenerator**
Gas generator
Générateur de gaz

(30) Priorität: 08.12.2004 EP 04029066
(43) Veröffentlichungstag der Anmeldung: 14.06.2006
(73) Patentinhaber: Delphi Technologies, Inc., Troy, MI 48007 (US)
(72) Erfinder: Blessing, Uwe, 90409 Nürnberg (DE); Gärtner, Jochem, 90408 Nürnberg (DE); Lehniger, Peter, 91059 Erlangen (DE); Winterhalder, Marc Alexander, 84518 Garching/Alz (DE)
(74) Vertreter: Denton, Michael John

(56) Entgegenhaltungen:
- EP-A- 1 090 815
- EP-A- 1 477 375
- WO-A-00/68043
- DE-A1- 19 726 295
- US-A1- 2003 057 688
- US-B1- 6 406 053

## Beschreibung

Die vorliegende Erfindung betrifft einen Gasgenerator, insbesondere für Luftsackmodule in Kraftfahrzeugen, gemäß dem Oberbegriff des Anspruchs 1, wie er beispielsweise aus der EP 1 090 815 A2 bekannt geworden ist.

Derartige mehrstufige Gasgeneratoren sind aus dem Stand der Technik bereits bekannt. In Abhängigkeit von den jeweiligen Anforderungen können eine oder mehrere Generatorstufen gezündet werden. Der gleiche Gasgenerator kann bei Fahrzeuganwendungen somit für verschiedene Luftsackmodule und verschiedene Fahrzeugtypen verwendet werden. Mit Hilfe einer entsprechenden Steuerung kann aber auch bei einem mit einem Luftsackmodul in einem Fahrzeug installierten Gasgenerator in Abhängigkeit von der Stärke des Aufpralls, anderen Unfallbedingungen oder der Benutzungssituation, z.B. der Art der Sitzbelegung, entschieden werden, welche Generatorstufen zu welchem Zeitpunkt gezündet werden.

Bei solchen mehrstufigen Gasgeneratoren muss durch die geometrische Anordnung und die Gestaltung der einzelnen Generatorstufen verhindert werden, dass beim Zünden einer Generatorstufe auch die Treibladung der anderen Generatorstufe unbeabsichtigt gezündet wird (sympathetic ignition). Die Gehäuse der einzelnen Generatorstufen müssen also entsprechend voneinander isoliert sein, wobei aber gleichzeitig das Gewicht des Gasgenerators möglichst gering bleiben soll. Da es sich bei derartigen Gasgeneratoren um in sehr hoher Stückzahl gefertigte Massenprodukte handelt, soll zudem die Herstellung des Generators trotz dieser oben erwähnten Anforderungen möglichst einfach sein. Insbesondere sollen möglichst wenig unterschiedliche Teile zum Einsatz kommen.

Aus der DE 197 26 295 A1, der US 6406053 A, der WO 00/68043 A und der US 2003/0057688 A sind verschiedene zweistufige Gasgeneratoren bekannt, die jeweils zwei nebeneinander angeordnete Druckgehäuse aufweisen (so genanntes stage-beside-stage Design). Die beiden Druckkammern sind jedoch bei den aus den genannten Schriften bekannten Gasgeneratoren jeweils nur durch eine Trennwand voneinander getrennt und teilen wenigstens eine gemeinsame Wand.

Aus der EP 1477375 A1 ist ein zweistufiger Gasgenerator bekannt, bei dem eine Generatorstufe innerhalb der anderen angeordnet ist.

Aufgabe der vorliegenden Erfindung ist es, einen Gasgenerator der eingangs genannten Art zu schaffen, der möglichst leicht und kompakt ist, bei dem das oben erwähnte Problem des Überzündens nicht auftritt und der trotzdem möglichst einfach und kostengünstig in hoher Stückzahl gefertigt werden kann.

Diese Aufgabe wird erfindungsgemäß dadurch gelöst, dass die Generatorstufen jeweils mit einem eigenen, separaten Druckgehäuse ausgebildet sind und zumindest teilweise zusammen mit einer gemeinsamen Filtereinheit in einem gemeinsamen Filtergehäuse angeordnet sind, und der im Filtergehäuse verbleibende Raum zumindest bereichsweise als ein von in den Druckgehäusen ausgebildeten Ausströmöffnungen zur Filtereinheit führendes Ausströmkanalsystem ausgebildet ist.

Durch die Anordnung der beiden Generatorstufen in einem gemeinsamen, die Filtereinheit enthaltenden Filtergehäuse kann erfindungsgemäß der im

Inneren des Filtergehäuses befindliche, außerhalb der Brennkammern liegende Raum in geschickter Weise als ein Ausströmkanalsystem genutzt werden, welches die Gase durchströmen müssen. Somit werden die Gase nicht nur gefiltert, so dass ein möglichst partikelfreies Gas in den Luftsack gelangt, sondern können bereits vor Erreichen der Filtereinheit abkühlen. Da die beiden Generatorstufen nicht nur jeweils ein eigenes Gehäuse aufweisen (und nicht etwa ein gemeinsames Gehäuse mit einer Trennwand vorgesehen ist), sondern insgesamt als separate, unabhängig voneinander handhabbare Einheiten ausgebildet sind, kann der Gasgenerator modular aus verschiedenen Bausteinen zusammengesetzt werden, was Fertigung und Montage erheblich vereinfacht.

Aufgrund der Anordnung der Filtereinheit außerhalb der Druckgehäuse können diese relativ klein ausgeführt werden, wodurch Material und Gewicht eingespart werden. Es wurde erkannt, dass es nicht erforderlich ist, die Filtereinheit innerhalb eines Druckgehäuses anzuordnen, sondern dass es vielmehr genügt, ein vergleichsweise dünnwandiges Filtergehäuse vorzusehen, welches dann in vorteilhafter Weise außerdem dazu genutzt wird, bestimmte Zusatzfunktionen zu erfüllen.

Vorteilhafte Ausführungsformen der Erfindung sind in den Unteransprüchen und in der Beschreibung in Verbindung mit den beigefügten Zeichnungen beschrieben.

Nach einer aufgrund ihrer Einfachheit bevorzugten Ausführungsform der Erfindung sind genau zwei unterschiedlich große Generatorstufen vorgesehen. Die unterschiedlich großen Generatorstufen ermöglichen eine Auswahl unter zahlreichen unterschiedlichen Zündszenarien.

Gemäß einer weiteren bevorzugten Ausführungsform der Erfindung sind die einzelnen Generatorstufen nebeneinander angeordnet (so genanntes "stage-beside-stage"-Design). Bei nebeneinander angeordneten Generatorstufen können jeweils unterschiedliche Generatorstufen miteinander kombiniert werden und der Zusammenbau des Gasgenerators gestaltet sich besonders einfach.

Vorzugsweise füllen - im Querschnitt gesehen - die Generatorstufen das Filtergehäuse zumindest zu einem Großteil aus, wobei zumindest bereichsweise eine Außenkontur der Generatorstufen komplementär ist zu einer Innenkontur des Filtergehäuses. Durch dieses Design wird eine optimale Platzausnutzung gewährleistet und damit insgesamt ein besonders kompakter Gasgenerator realisiert.

Nach einer weiteren bevorzugten Ausführungsform der Erfindung sind zwei Generatorstufen mit jeweils im Wesentlichen halbkreisförmigem Querschnitt in einem Filtergehäuse mit im Wesentlichen kreisförmigem Querschnitt angeordnet. Eine derartige Anordnung eröffnet zahlreiche Möglichkeiten, die Filtereinheit geschickt zu platzieren, wie im Folgenden noch erläutert werden wird.

Gemäß einer anderen Ausführungsform besitzen die Generatorstufen jeweils einen Querschnitt in Form eines Kreissegments oder eines Kreisringsegments, wobei sie in diesem Fall ebenfalls in einem Filtergehäuse mit im Wesentlichen kreisförmigem Querschnitt angeordnet sein können. Wie auch die zuvor beschriebene Anordnung zeichnet sich diese Geometrie durch die Möglichkeit einer geschickten, platzsparenden Anordnung der Filtereinheit aus.

Insbesondere können Generatorstufen, die jeweils einen Querschnitt in Form eines Kreisringsegments besitzen, so angeordnet werden, dass sie einen geschlossenen Kreisring bilden, in dessen Zentrum ein gemeinsamer Ausströmkanal vorgesehen ist. Ein solcher im Zentrum angeordneter Ausströmkanal kann im Prinzip von beliebig vielen Generatorstufen umgeben sein und ermöglicht eine symmetrische Abführung der entstehenden Gase in Richtung der Filtereinheit. Innerhalb des Ausströmkanals können die Gase bereits durch Expansion abkühlen.

Vorzugsweise ist die Filtereinheit oberhalb der Ausströmöffnungen angeordnet.

Besonders vorteilhaft ist eine Anordnung der Filtereinheit zumindest im Wesentlichen zwischen den Generatorstufen. Eine derart angeordnete Filtereinheit kann von den aus den einzelnen Generatorstufen ausströmenden Gasen von mehreren Seiten aus erreicht werden, was eine besonders effiziente Filterung ermöglicht.

Nach einer anderen bevorzugten Ausführungsform der Erfindung kann die Filtereinheit die Generatorstufen zumindest bereichsweise umgeben.

Ebenfalls vorteilhaft ist es, die Filtereinheit oberhalb der Generatorstufen anzuordnen.

Gemäß einer weiteren bevorzugten Ausführungsform der Erfindung ist die Filtereinheit ringförmig ausgebildet. Die Filtereinheit kann dabei z.B. die Generatorstufen umgeben oder auf einem von mehreren Generatorstufen zusammen gebildeten Voll- oder Hohlzylinder aufliegen. Eine derartige Anordnung zeichnet sich durch ihre Symmetrie aus. Eine ringförmige Filtereinheit ist zudem vergleichsweise einfach zu montieren.

Nach einer weiteren bevorzugten Ausführungsform können Ausströmöffnungen in einem unteren Bereich der Druckgehäuse ausgebildet sein. In Verbindung mit einer oberhalb der Generatorstufen angeordneten Filtereinheit ermöglichen in einem unteren Bereich der Druckgehäuse ausgebildete Ausströmöffnungen, dass die erzeugten Gase bereits vor Erreichen der Filtereinheit durch Expansion innerhalb des Ausströmkanalsystems zwischen den Ausströmöffnungen und der Filtereinheit abkühlen.

Nach einer weiteren bevorzugten Ausführungsform der Erfindung ist in dem Ausströmkanalsystem wenigstens eine Umlenkstelle vorgesehen, die dem zur Filtereinheit strömenden Gas eine Richtungsänderung insbesondere um etwa 90° aufzwingt. An dieser Umlenkstelle können in dem Gas enthaltene Partikel bereits vor Erreichen der Filtereinheit aus dem Gasstrom entfernt werden, und zwar besonders wirksam dann, wenn an der Umlenkstelle wenigstens eine etwa senkrecht zur Strömungsrichtung des umzulenkenden Gases verlaufende Prallfläche vorgesehen ist. An dieser Prallfläche werden die Gase abgelenkt und darin enthaltene Partikel gestoppt, so dass sie gar nicht erst zur Filtereinheit gelangen.

Nach einer weiteren bevorzugten Ausführungsform der Erfindung erstreckt sich ein zentraler Ausströmkanal im Wesentlichen über die gesamte axiale Länge des Filtergehäuses und ist im Bereich der oberen Abschlusswand des Filtergehäuses von einer Filtereinheit umgeben. Diese Anordnung ist besonders aufgrund ihrer Symmetrie von Vorteil und hat zudem den weiteren Vorteil, dass beim Durchströmen des relativ langen Ausströmkanals die Gase bereits deutlich abkühlen. Die im Bereich der oberen Abschlusswand des Filtergehäuses vorgesehene Filtereinheit ist besonders dann vorteilhaft, wenn Ausströmöffnungen des Filtergehäuses auf Höhe der Filtereinheit angeordnet sind, um - was erfindungsgemäß erwünscht ist - ein Ausströmen der Gase am oberen Ende des Filtergehäuses zu ermöglichen.

Vorzugsweise ist das Filtergehäuse als Generatoraußengehäuse ausgebildet. Ein zusätzliches Generatoraußengehäuse entfällt also, was Material und damit Kosten, Gewicht und Einbauraum spart.

Das Filtergehäuse kann gemäß einer bevorzugten Weiterbildung der Erfindung einen Befestigungsflansch zur Befestigung des Gasgenerators an einem Luftsackmodul aufweisen. Damit kann das Filtergehäuse als Generatoraußengehäuse verwendet werden, ohne dass ein zusätzliches Verbindungsstück zur Befestigung am Luftsackmodul benötigt wird.

Das Filtergehäuse kann nach einer vorteilhaften Weiterbildung der Erfindung so ausgebildet sein, dass es die Generatorstufen und vorzugsweise auch die Filtereinheit klammerartig umgreift. Durch eine solche Anordnung wird die Stabilität des gesamten Gasgenerators erhöht und das Filtergehäuse mit einer Zusatzfunktion versehen.

Besonders vorteilhaft ist es, wenn Ausströmöffnungen des Filtergehäuses auf der Höhe der Filtereinheit vorgesehen sind. Eine solche Anordnung ist insbesondere dann zu bevorzugen, wenn sich die Filtereinheit oben in dem Filtergehäuse befindet und letzteres auch das Generatoraußengehäuse bildet, da für eine optimale Entfaltung des Luftsacks das Gas möglichst weit oben, aber dennoch in radialer Richtung aus dem Gasgenerator ausströmen sollte.

Nach einer weiteren bevorzugten Ausführungsform der Erfindung ist das Filtergehäuse durch den mittels der Generatorstufen erzeugten Gasdruck dehnbar, so dass es eine Druckpufferfunktion unterstützen kann. Durch eine solche Expansion des Filtergehäuses kann der Druck des ausströmenden Gases verringert werden, so dass der Luftsack mit geringerer Wucht aufgeblasen wird als bei einem weniger nachgiebig ausgestalteten Filtergehäuse. Von besonderer Bedeutung ist dies vor allem bei hohen Umgebungstemperaturen, die im Vergleich zu niedrigen Umgebungstemperaturen einen höheren Maximaldruck zur Folge haben, der sich ohne Druckpuffer im Aufblasverhalten des Luftsacks voll niederschlagen würde. Die Dehnbarkeit des Filtergehäuses kann dabei so eingestellt werden, dass das Aufblasverhalten von der Umgebungstemperatur weniger abhängig wird, sich der Luftsack also im Sommer nicht zu "aggressiv" und im Winter "dynamisch" genug verhält. Hierbei ist auch zu beachten, dass bestehende Vorschriften eine einwandfreie Funktionsweise bei gleichzeitiger Einhaltung der Sicherheitsbedingungen über einen Temperaturbereich von -35°C bis +85°C verlangen, d.h. der Gasgenerator auch für sehr niedrige Temperaturen ausgelegt sein muss. Die Druckpufferfunktion des Filtergehäuses stellt insbesondere sicher, dass bei sehr hohen Temperaturen die erhöhte Druckentwicklung nicht zu einem Bersten des Filtergehäuses führt.

Im Folgenden wird die vorliegende Erfindung anhand zweier bevorzugter Ausführungsbeispiele und unter Bezugnahme auf die beigefügten Figuren näher erläutert. Im Einzelnen zeigen die Figuren:
- Fig. 1: einen axialen Schnitt durch einen Gasgenerator nach einer ersten Ausführungsform der Erfindung,
- Fig. 2: einen radialen Schnitt durch den Gasgenerator aus Fig. 1 in teilweise vereinfachter Darstellung,
- Fig. 3: einen axialen Schnitt durch einen Gasgenerator nach einer zweiten Ausführungsform der Erfindung,
- Fig. 4: einen radialen Schnitt durch den Gasgenerator aus Fig. 3 in teilweise vereinfachter Darstellung,
- Fig. 5: einen axialen Schnitt durch einen Gasgenerator nach einer dritten Ausführungsform der Erfindung, und
- Fig. 6: einen radialen Schnitt durch den Gasgenerator aus Fig. 5 in teilweise vereinfachter Darstellung.

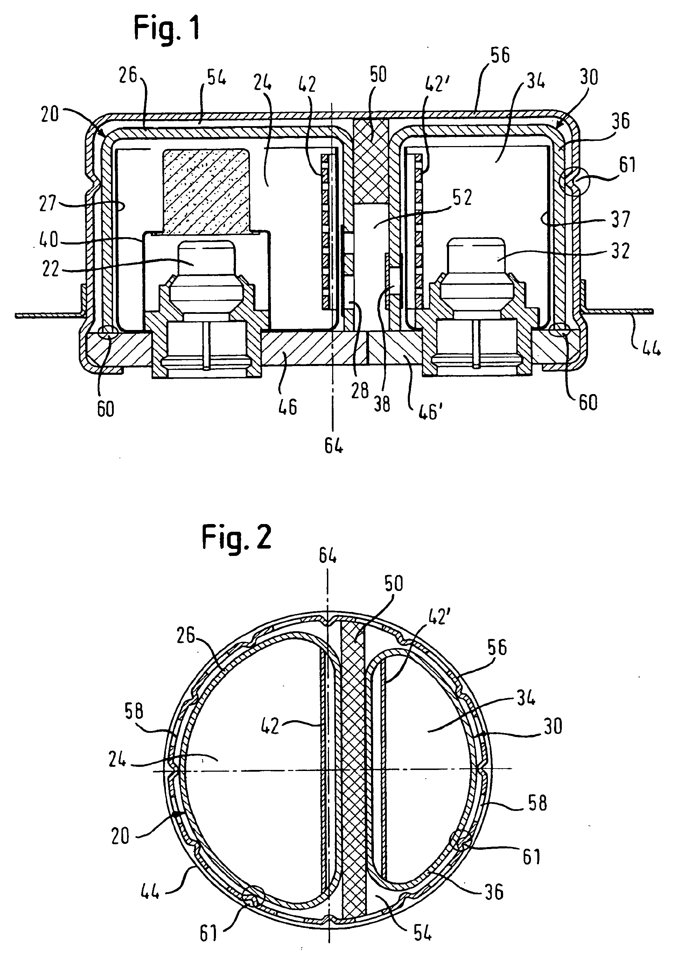

Zunächst soll unter Bezugnahme auf Fig. 1 und 2 ein erstes Ausführungsbeispiel der Erfindung beschrieben werden.

Fig. 2 verdeutlicht den Grundaufbau des zweistufigen Gasgenerators gemäß einer ersten Ausführungsform der Erfindung, der insgesamt eine im Wesentlichen zylindrische Form besitzt. Zwei Generatorstufen 20, 30 mit jeweils im Wesentlichen halbkreisförmigem Querschnitt und gleicher Höhe sind nebeneinander angeordnet, so dass ihre gemeinsame Außenkontur im Wesentlichen einen Kreis bildet. Die in den Fig. 1 und 2 links liegende Generatorstufe 20 ist etwas größer als die in den Figuren rechts liegende Generatorstufe 30 und erstreckt sich bis über eine Mittelebene 64 des Generators. Beide Generatorstufen 20, 30 sind von im Querschnitt halbkreisförmigen Druckgehäusen 26, 36 begrenzt, deren untere Begrenzung jeweils eine entsprechend geformte Bodenplatte 46, 46' bildet, wobei die beiden Bodenplatten 46, 46' gemeinsam im Querschnitt einen Kreis bilden. Die Seitenwände der Druckgehäuse 26, 36 sind an Schweißstellen 60 mit den Bodenplatten 46, 46' verschweißt. Die Bodenplatten 46, 46' können ebenfalls entlang ihrer Fügenaht miteinander verschweißt oder mechanisch - beispielsweise über eine Nut-Feder-Verbindung - miteinander verbunden sein.

Die Bodenplatten 46, 46' ragen jeweils außen über die Druckgehäuse 26, 36 hinaus, so dass ein umlaufender radial überstehender Rand gebildet ist. Dieser Rand erleichtert nicht nur die Befestigung des Filtergehäuses 56 z.B. mit Hilfe einer Umformung, wie beispielsweise einer Bördelung oder Rollierung, sondern eröffnet vielfältige weitere Einsatz- und Befestigungsmöglichkeiten, beispielsweise in Beifahrer-, Seiten- oder Curtainairbags.

Der Innenraum eines Druckgehäuses 26 der größeren Generatorstufe 20 bildet eine Brennkammer 24, in der eine in den Figuren nicht dargestellte Treibladung in Form von gepressten Brennstoffpellets gelagert ist. Analog bildet das Innere des kleineren Druckgehäuses 36 eine Brennkammer 34, in der sich eine zweite ebenfalls nicht dargestellte Treibladung gleicher Art befindet.

Wie in Fig. 1 erkennbar, ist in jeder Generatorstufe 20, 30 jeweils ein Zünder 22, 32 angeordnet, der in die entsprechende Bodenplatte 46, 46' eingesetzt ist. Die beiden Zünder 22, 32 besitzen jeweils einen kreisförmigen Querschnitt und sind näherungsweise symmetrisch zu der Mittelebene 64 des Gasgenerators angeordnet.

Die größere Generatorstufe 20 ist mit einem Boostercontainer 40 ausgestattet, welcher über den Zünder 22 gestülpt ist und eine zylindrische Form aufweist. Dieser Boostercontainer 40 ist ebenso wie der verbleibende Raum der Brennkammer 24 mit Brennstoffpellets gefüllt und öffnet sich erst, wenn ein gewisser Schwellendruck aufgebaut ist, so dass in der Brennkammer 24 sehr schnell ein sehr hoher Druck aufgebaut werden kann.

Jeweils parallel zu den einander gegenüberliegenden ebenen inneren Seitenwänden der Druckgehäuse 26, 36 und mit geringem Abstand von diesen erstrecken sich in beiden Brennkammern 24, 34 Auffanggitter 42, 42' parallel zur Mittelebene 64 des Generators. Wie man in Fig. 1 sieht, erstrecken sich die Auffanggitter 42, 42' über einen wesentlichen Teil, aber nicht über die gesamte Höhe der Brennkammern 24, 34. Die Brennstoffpellets der Treibladungen werden von den Auffanggittern 42, 42' daran gehindert, weiter unten näher beschriebene Ausströmöffnungen 28, 38 zu verstopfen.

In beiden Druckgehäusen 20, 30 sind so genannte Ladenäpfe 27, 37 angeordnet. Dabei handelt es sich um oben offene Gefäße, deren Seitenwände parallel zu den Wänden der Druckgehäuse mit geringem Abstand von diesen verlaufen. Die Ladenäpfe 27, 37 dienen als Montagehilfe beim Einfüllen der Brennstoffpellets in die Druckgehäuse 20, 30. Die Pellets werden zunächst in die Ladenäpfe 27, 37 gefüllt, bevor die Druckgehäuse 20, 30 darüber geschoben und mit den Bodenplatten 46, 46' verschweißt werden.

Wie in Fig. 2 zu erkennen ist, sind die beiden Generatorstufen 20, 30 in einem Filtergehäuse 56 mit im Wesentlichen kreisförmigem Querschnitt angeordnet. Beide Generatorstufen 20, 30 liegen vollständig innerhalb des Filtergehäuses 56, das an seiner Unterseite zur Gewichts- und Materialersparnis eine kreisförmige Öffnung besitzt. Das Filtergehäuse 56 liegt an in Umfangsrichtung gleichmäßig voneinander beabstandeten Fixierstellen 61 in Form von punktuellen Eindrückungen an den äußeren Wänden der beiden Druckgehäuse 26, 36 an und besitzt unten eine Bördelung, mit der es klammerartig die beiden Bodenplatten 46, 46' umgreift.

Zwischen den beiden Generatorstufen 20, 30 ist direkt unterhalb der oberen Abschlusswand des Filtergehäuses 56 eine U-förmig ausgebildete Filtereinheit 50 angeordnet. Die Filtereinheit 50 erstreckt sich von einer Seitenwand des Filtergehäuses 56 bis zur anderen quer durch das Filtergehäuse 56, wie in Fig. 2 zu sehen ist. Die beiden U-Schenkel ragen vom oberen Ende des Filtergehäuses 56 aus nach unten und können oberhalb der axialen Mitte der beiden Generatorstufen 20, 30 enden. Sie können sich aber auch entlang der Seitenwand des Filtergehäuses 56 bis zu den Bodenplatten 46, 46' erstrecken.

Der verbleibende freie Raum zwischen den beiden Generatorstufen 20, 30 unterhalb der Filtereinheit bildet einen Ausströmkanal 52.

In beiden Druckgehäusen 26, 36 sind die in den Ausströmkanal 52 mündende Ausströmöffnungen 28, 38 vorgesehen, welche in einem unteren Bereich der Druckgehäuse 26, 36 liegen und sich somit unterhalb der Filtereinheit 50 befinden. In dem Ausströmkanal 52 ist ein die Ausströmöffnungen 28, 38 abdeckendes Stahlband oder eine anders geformte Abdeckung vorgesehen, welche in den Fig. 1 und 2 nicht dargestellt ist und ein unerwünschtes Überzünden zwischen den beiden Generatorstufen 20, 30 bei zeitversetzter Zündung verhindert.

Das Filtergehäuse 56 besitzt ebenfalls Ausströmöffnungen 58, welche nur in der Fig. 2 dargestellt sind und sich auf der Höhe der Filtereinheit 50 und somit oberhalb der Ausströmöffnungen 28, 38 der Druckgehäuse 26, 36 befinden. Die Ausströmöffnungen 58 des Filtergehäuses 56 sind in gleichmäßigen Abständen über den gesamten Umfang des zylindrischen Filtergehäuses 56 verteilt und befinden sich auf der gleichen Höhe wie die Fixierpunkte 61, so dass jeweils ein Fixierpunkt 61 und eine Ausströmöffnung 58 sich in Umfangsrichtung abwechseln, wie in Fig. 2 zu sehen ist. Das Vorsehen diskreter, hier punktueller Fixierstellen 61, an denen das Filtergehäuse 56 an den Druckgehäusen 26, 36 anliegt, erlaubt ein Anströmen der Ausströmöffnungen 58 von allen Seiten, bedeutet also keine axiale Strömungssperre.

An dem Filtergehäuse 56, welches bei dem in Fig. 1 und 2 dargestellten Ausführungsbeispiel auch das Außengehäuse des Gasgenerators bildet, ist ein Flansch 44, beispielsweise ein Ringflansch, angebracht, der zur Befestigung des Gasgenerators an einem Luftsackmodul dient, womit das Filtergehäuse 56 eine weitere Zusatzfunktion erfüllt.

Die in einer oder beiden Generatorstufen 20, 30 erzeugten Gase gelangen durch die Ausströmöffnungen 28, 38 in den Ausströmkanal 52, in welchem sie dann nach oben in Richtung der Filtereinheit 50 strömen. Nach der Filterung verlassen die Gase die Filtereinheit 50 an deren in Fig. 1 oberem Ende und strömen durch den verbleibenden Innenraum 54 des Filtergehäuses 56 zwischen den Druckgehäusen 26, 36 und dem Filtergehäuse 56 zu den radialen Ausströmöffnungen 58 des Filtergehäuses 56, durch die sie den Gasgenerator schließlich verlassen.

Der beschriebene zweistufige Gasgenerator kann entweder so verwendet werden, dass nur eine der beiden Stufen 20, 30 gezündet wird, oder aber es werden beide Generatorstufen 20, 30 zeitversetzt oder gleichzeitig gezündet. Insbesondere beim Zünden beider Generatorstufen 20, 30 dient der Ausströmkanal 52 außerhalb der Druckgehäuse 26, 36 auch zum Abkühlen und Mischen der von den beiden Generatorstufen 20, 30 erzeugten Gase.

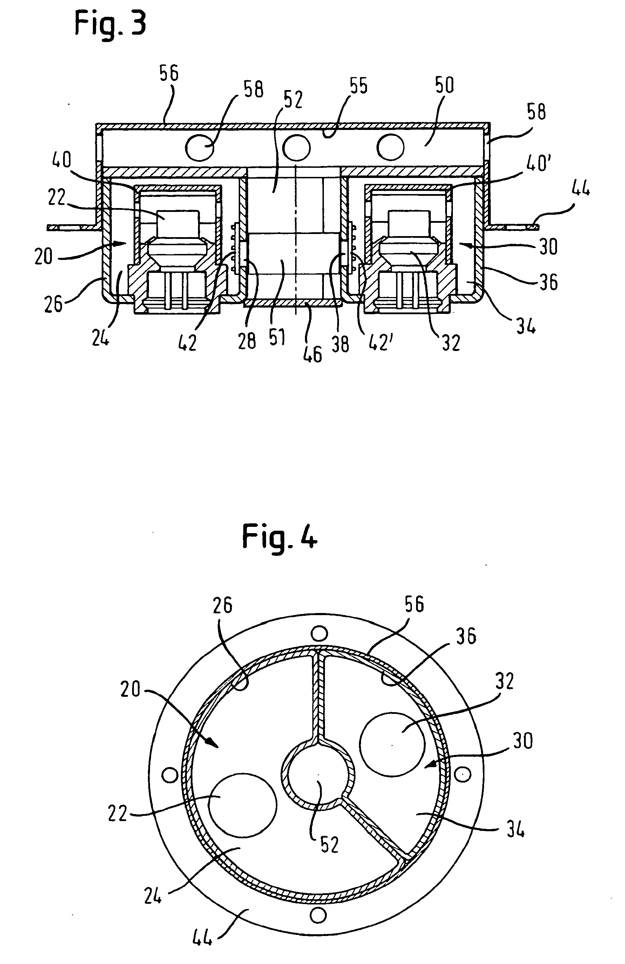

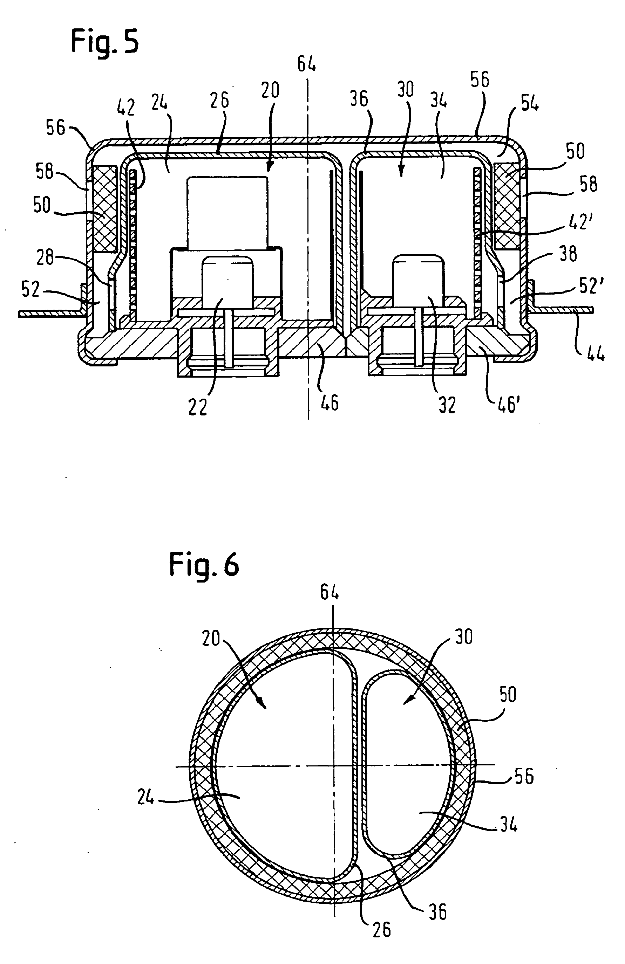

Die Fig. 3 und 4 zeigen ein anderes Ausführungsbeispiel eines erfindungsgemäßen, ebenfalls im Wesentlichen zylindrischen Gasgenerators, der wie der zuvor anhand von Fig. 1 und 2 beschriebene Gasgenerator zwei separate Generatorstufen 20, 30 mit eigenen Druckgehäusen 26, 36 besitzt. Für gleiche Bauteile wurden gleiche Bezugszeichen verwendet, und es werden im Folgenden im Wesentlichen nur die Unterschiede zu dem zuvor beschriebenen Ausführungsbeispiel beschrieben. Die bisherige Beschreibung gilt auch für Teile der Ausführungsform gemäß Fig. 3 und 4, die die gleichen Bezugszeichen aufweisen. Diese Konvention gilt auch für die weitere Ausführungsform gemäß Fig. 5 und 6.

Die beiden Druckgehäuse 26, 36 besitzen jeweils einen kreisringsegmentförmigen Querschnitt und bilden gemeinsam einen Ring, in dessen Mitte ein axial verlaufender Ausströmkanal 52 vorgesehen ist.

Abgesehen von der Geometrie der Generatorstufen 20, 30, unterscheidet sich der in den Fig. 3 und 4 dargestellte Gasgenerator von dem zuvor beschriebenen Ausführungsbeispiel insbesondere dadurch, dass das Filtergehäuse 56 , wie in Fig. 3 erkennbar, kappenartig auf den beiden Generatorstufen 20, 30 aufliegt. Hier geht es in einen umlaufenden radial vorstehenden Flansch 44 über, der wie bei dem vorherigen Ausführungsbeispiel der Befestigung des Gasgenerators an einem Luftsackmodul dient.

Wie man in Fig. 3 erkennt, erstrecken sich die beiden Druckgehäuse 26, 36 in axialer Richtung jeweils etwa über in diesem Beispiel zwei Drittel bis drei Viertel der Höhe des Gasgenerators und schließen oben jeweils mit einer Wand ab, die parallel beabstandet zum Filtergehäuse 56 verläuft.

In den beiden Druckgehäusen 26, 36 ist jeweils ein Zünder 22, 32 mit kreisförmigem Querschnitt angeordnet. Es sind keine separaten Bodenplatten für die Druckgehäuse 26, 36 vorgesehen, sondern deren Seitenwände sind nach unten gezogen und nach innen umgeklappt, so dass sie den Boden der Generatorstufen 20, 30 bilden. In diesem Boden sitzt je ein Zünder 22, 32 jeweils in einer entsprechenden Aussparung. Die Generatorstufen 20, 30 sind beide mit einem Boostercontainer 40, 40' ausgestattet, wie er bereits in Verbindung mit dem in den Fig. 1 und 2 dargestellten Ausführungsbeispiel beschrieben wurde.

Zwischen den beiden Generatorstufen 20, 30 ist eine kreisförmige Bodenplatte 46 vorgesehen, welche den zentralen Ausströmkanal 52 nach unten abschließt und mit den Druckgehäusen 26, 36 der beiden Generatorstufen 20, 30 verschweißt ist.

In dem oberen Bereich des Filtergehäuses 56 ist zwischen dessen oberer Abschlusswand und den beiden Druckgehäusen 26, 36 eine ringförmige oder eventuell als flaches Zylinderelement ausgebildete Filtereinheit 50 angeordnet. Diese liegt auf den beiden Druckgehäusen 26, 36. In ihrer Mitte ist vorzugsweise eine kreisförmige Öffnung ausgebildet, welche mit der Öffnung des von den beiden Generatorstufen 20, 30 gebildeten Kreisrings ausgerichtet ist. Somit erstreckt sich der im Zentrum des Gasgenerators verlaufende Ausströmkanal 52 axial über die gesamte Länge des Gasgenerators ausgehend von der Bodenplatte 46 zwischen den Druckgehäusen 26, 36 und durch den Filterring 50 bis zur oberen Abschlusswand des Filtergehäuses 56.

Die obere Abschlusswand des Ausströmkanals 52 bildet eine Prallfläche 55, an der die nach oben strömenden Gase umgelenkt werden, wie weiter unten genauer beschrieben wird.

Beide Druckgehäuse 26, 36 besitzen in einem unteren Bereich in den Ausströmkanal 52 mündende Ausströmöffnungen 28, 38, welchen, wie es bereits für das vorangegangene Ausführungsbeispiel beschrieben wurde, von innen Auffanggitter 42, 42' vorgelagert sind. Auf der Höhe der Ausströmöffnungen 28, 38 ist im Ausströmkanal 52 ein ringförmiges Stahlband 51 vorgesehen.

Das Filtergehäuse 56 besitzt ebenso wie bei dem zuvor beschriebenen Ausführungsbeispiel in seinem oberen Bereich angeordnete, radiale Ausströmöffnungen 58.

Das in den beiden Generatorstufen 20, 30 erzeugte Gas strömt aus den Druckgehäusen 26, 36 durch die Ausströmöffnungen 28, 38 in den Ausströmkanal 52, in dessen Inneren die Gase nach oben gelangen. An der Prallfläche 55 werden die aufsteigenden Gase um etwa 90° abgelenkt und strömen radial nach außen durch den Filter 50 zu den Ausströmöffnungen 58.

Beim Umlenken der Gasströmung an der Prallfläche 55 wird bereits zumindest ein Teil der in dem Gas enthaltenen Partikel gestoppt und gelangt somit gar nicht erst zur Filtereinheit 50.

Die in den beiden Generatorstufen 20, 30 erzeugten Gase verlassen somit die Druckgehäuse 26, 36 unten durch die Ausströmöffnungen 28, 38 und strömen parallel zu den radial äußeren Wänden der Druckgehäuse 26, 36 nach oben. Durch die ringförmige Filtereinheit 50 gelangen sie weiter nach oben bis zu den Ausströmöffnungen 58, durch welche sie das Filtergehäuse 56 und somit den Gasgenerator schließlich radial verlassen.

### Bezugszeichenliste

- 20: erste Generatorstufe
- 22: Zünder
- 24: Brennkammer
- 26: Druckgehäuse der ersten Generatorstufe
- 27: Ladenapf für Brennstoffpellets der ersten Generatorstufe
- 28: Ausströmöffnungen des Druckgehäuses 26
- 30: zweite Generatorstufe
- 32: Zünder
- 34: Brennkammer
- 36: Druckgehäuse der zweiten Generatorstufe
- 37: Ladenapf für Brennstoffpellets der zweiten Generatorstufe
- 38: Ausströmöffnungen des Druckgehäuses 36
- 40, 40': Boostercontainer
- 42, 42': Auffanggitter
- 44: Flansch
- 46, 46': Bodenplatten
- 50: Filtereinheit
- 52, 52': Ausströmkanal
- 54: Innenraum des Filtergehäuses
- 55: Prallfläche
- 56: Filtergehäuse
- 58: Ausströmöffnungen des Filtergehäuses
- 60: Schweißstellen
- 61: Fixierstellen
- 64: Mittelebene

## Patentansprüche

1. Gasgenerator, insbesondere für Luftsackmodule in Kraftfahrzeugen, mit mehreren separaten, unabhängig voneinander zünd- und handhabbaren Generatorstufen (20, 30), die jeweils in einem eigenen separaten Druckgehäuse (26, 36) wenigstens einen Zünder (22, 32), zumindest eine Treibladung und wenigstens eine Brennkammer (24, 34) umfassen,
wobei die Generatorstufen (20, 30) zumindest teilweise zusammen mit einer gemeinsamen Filtereinheit (50) in einem gemeinsamen Filtergehäuse (56) angeordnet sind
und der im Filtergehäuse (56) verbleibende Raum zumindest bereichsweise als ein von in den Druckgehäusen (26, 36) ausgebildeten Ausströmöffnungen (28, 38) zur Filtereinheit (50) führendes Ausströmkanalsystem (52, 52', 54) ausgebildet ist,
**dadurch gekennzeichnet,**
**dass** die beiden Druckgehäuse (26, 36) derart nebeneinander in dem Filtergehäuse (56) angeordnet sind, dass durch einen verbleibenden freien Raum zwischen einander zugewandten Seitenwänden der beiden Druckgehäuse (26, 36) ein Ausströmkanal (52) gebildet ist, und dass die beiden Druckgehäuse (26, 36) mit ihren äußeren Wänden umfangsseitig an dem Filtergehäuse (56) anliegen.

2. Gasgenerator nach Anspruch 1,
**dadurch gekennzeichnet,**
**dass** genau zwei unterschiedlich große Generatorstufen (20, 30) vorgesehen sind.

3. Gasgenerator nach Anspruch 1 oder 2,
**dadurch gekennzeichnet,**
**dass** die einzelnen Generatorstufen (20, 30) nebeneinander angeordnet sind.

4. Gasgenerator nach einem der vorstehenden Ansprüche,
**dadurch gekennzeichnet,**
**dass** im Querschnitt die Generatorstufen (20, 30) das Filtergehäuse (56) zumindest zu einem Großteil ausfüllen, wobei zumindest bereichsweise eine Außenkontur der Generatorstufen komplementär ist zu einer Innenkontur des Filtergehäuses (56).

5. Gasgenerator nach einem der vorstehenden Ansprüche,
**dadurch gekennzeichnet,**
**dass** zwei Generatorstufen (20, 30) mit jeweils im Wesentlichen halbkreisförmigem Querschnitt in einem Filtergehäuse (56) mit im Wesentlichen kreisförmigem Querschnitt angeordnet sind.

6. Gasgenerator nach einem der vorstehenden Ansprüche,
**dadurch gekennzeichnet,**
**dass** die Generatorstufen (20, 30) jeweils einen Querschnitt in Form eines Kreissegments oder eines Kreisringsegments besitzen.

7. Gasgenerator nach einem der vorstehenden Ansprüche,
**dadurch gekennzeichnet ,**
**dass** die Generatorstufen (20, 30) einen geschlossenen Kreisring bilden, in dessen Zentrum der gemeinsame Ausströmkanal (52) vorgesehen ist.

8. Gasgenerator nach einem der vorstehenden Ansprüche,
**dadurch gekennzeichnet,**
**dass** die Filtereinheit (50) oberhalb der Ausströmöffnungen (28, 38) angeordnet ist.

9. Gasgenerator nach einem der vorstehenden Ansprüche,
**dadurch gekennzeichnet ,**
**dass** die Filtereinheit (50) zumindest im Wesentlichen zwischen den Generatorstufen (20, 30) angeordnet ist.

10. Gasgenerator nach einem der vorstehenden Ansprüche,
**dadurch gekennzeichnet ,**
**dass** die Filtereinheit (50) die Generatorstufen (20, 30) zumindest bereichsweise umgibt.

11. Gasgenerator nach einem der vorstehenden Ansprüche,
**dadurch gekennzeichnet,**
**dass** die Filtereinheit (50) oberhalb der Generatorstufen (20, 30) angeordnet ist.

12. Gasgenerator nach einem der vorstehenden Ansprüche,
**dadurch gekennzeichnet,**
**dass** die Filtereinheit (50) ringförmig ausgebildet ist.

13. Gasgenerator nach einem der vorstehenden Ansprüche,
**dadurch gekennzeichnet ,**
**dass** Ausströmöffnungen (28, 38) in einem unteren Bereich der Druckgehäuse (26, 36) ausgebildet sind.

14. Gasgenerator nach einem der vorstehenden Ansprüche,
**dadurch gekennzeichnet,**
**dass** im Ausströmkanalsystem (52, 54) wenigstens eine Umlenkstelle vorgesehen ist, die dem zur Filtereinheit (50) strömenden Gas eine Richtungsänderung insbesondere um etwa 90° aufzwingt.

15. Gasgenerator nach Anspruch 14,
**dadurch gekennzeichnet,**
**dass** an der Umlenkstelle wenigstens eine etwa senkrecht zur Strömungsrichtung des umzulenkenden Gases verlaufende Prallfläche (55) vorgesehen ist.

16. Gasgenerator nach einem der vorstehenden Ansprüche,
**dadurch gekennzeichnet,**
**dass** ein zentraler Ausströmkanal (52) sich im Wesentlichen über die gesamte axiale Länge des Filtergehäuses (56) erstreckt und im Bereich der oberen Abschlusswand des Filtergehäuses (56) von einer Filtereinheit (50) umgeben ist.

17. Gasgenerator nach einem der vorstehenden Ansprüche,
**dadurch gekennzeichnet,**
**dass** das Filtergehäuse (56) als Generatoraußengehäuse ausgebildet ist.

18. Gasgenerator nach einem der vorstehenden Ansprüche,
**dadurch gekennzeichnet,**
**dass** das Filtergehäuse (56) einen Befestigungsflansch (44) zur Befestigung am Luftsackmodul aufweist.

19. Gasgenerator nach einem der vorstehenden Ansprüche,
**dadurch gekennzeichnet,**
**dass** das Filtergehäuse (56) die Generatorstufen (20, 30) klammerartig umschließt.

20. Gasgenerator nach einem der vorstehenden Ansprüche,
**dadurch gekennzeichnet,**
**dass** das Filtergehäuse (56) durch eine Umformung, insbesondere eine Rollierung oder Bördelung, an den Druckgehäusen (26, 36) der Generatorstufen (20, 30) befestigt ist.

21. Gasgenerator nach einem der vorstehenden Ansprüche,
**dadurch gekennzeichnet,**
**dass** Ausströmöffnungen (58) des Filtergehäuses (56) auf der Höhe der Filtereinheit (50) vorgesehen sind.

22. Gasgenerator nach einem der vorstehenden Ansprüche,
**dadurch gekennzeichnet,**
**dass** das Filtergehäuse (56) insbesondere zur Unterstützung einer Druckpufferfunktion durch den mittels der Generatorstufen (20, 30) erzeugbaren Gasdruck ausdehnbar ausgebildet ist.

23. Gasgenerator nach einem der vorstehenden Ansprüche,
**dadurch gekennzeichnet,**
**dass** die Druckgehäuse (26, 36) der Generatorstufen (20, 30) jeweils mit einer Bodenplatte (46, 46') verschweißt sind, insbesondere unter Verwendung eines Laserschweißverfahrens oder eines Kondensatorentladungsschweißverfahrens.

24. Gasgenerator nach einem der vorstehenden Ansprüche,
**dadurch gekennzeichnet,**
**dass** Bödenplatten (46, 46') oder eine gemeinsame Bodenplatte der Druckgehäuse (26, 36) bzw. Generatorstufen (20, 30) einen in radialer Richtung überstehenden Rand bilden.

## Claims

1. A gas generator, in particular for airbag modules in motor vehicles, having a plurality of separate generator stages (20, 30) which can be ignited and handled independently of one another and each of which includes in its separate pressure housing (26, 36) at least one igniter (22, 32), at least one propellant charge and at least one combustion chamber (24, 34),
wherein the generator stages (20, 30) are arranged at least partly in a common filter housing (56) together with a common filter unit (50),
and the space remaining in the filter housing (56) is formed at least partially as an outflow passage system (52, 52', 54) leading from outflow openings (28, 38) formed in the pressure housings (26, 36) to the filter unit (50),
**characterized in that**
the two pressure housings (26, 36) are arranged adjacent each other in the filter housing (56) such, that a remaining free space between side walls of the two pressure housings (26, 36) facing each other forms an outflow passage (52) and that the two pressure housings (26, 36) with their outer walls are in contact with the filter housing (56) at the circumferential end.

2. A gas generator in accordance with claim 1,
**characterized in that**
precisely two generator stages (20, 30) of different sizes are provided.

3. A gas generator in accordance with claim 1 or 2,
**characterized in that**
the individual generator stages (20, 30) are arranged next to each other.

4. A gas generator in accordance with one of the preceding claims,
**characterized in that**
in cross-section, the generator stages (20, 30) fill the filter housing (56) at least predominantly, with an outer contour of the generator stages being at least partially complementary to an inner contour of the filter housing (56).

5. A gas generator in accordance with one of the preceding claims,
**characterized in that**
two generator stages (20, 30) each having a substantially semi-circular cross-section are arranged in a filter housing (56) having a substantially circular cross-section.

6. A gas generator in accordance with one of the preceding claims,
**characterized in that**
the generator stages (20, 30) each have a cross-section in the form of a segment of a circle or of a segment of an annulus.

7. A gas generator in accordance with one of the preceding claims,
**characterized in that**
the generator stages (20, 30) form a closed annulus at whose center the common outflow passage (52) is provided.

8. A gas generator in accordance with one of the preceding claims,
**characterized in that**
the filter unit (50) is arranged above the outflow openings (28, 38).

9. A gas generator in accordance with one of the preceding claims,
**characterized in that**
the filter unit (50) is arranged at least substantially between the generator stages (20, 30).

10. A gas generator in accordance with one of the preceding claims,
**characterized in that**
the filter unit (50) surrounds the generator stages (20, 30) at least partially.

11. A gas generator in accordance with one of the preceding claims,
**characterized in that**
the filter unit (50) is arranged above the generator stages (20, 30).

12. A gas generator in accordance with one of the preceding claims,
**characterized in that**
the filter unit (50) is ring-shaped.

13. A gas generator in accordance with one of the preceding claims,
**characterized in that**
outflow openings (28, 38) are formed in a lower region of the pressure housings (26, 36).

14. A gas generator in accordance with one of the preceding claims,
**characterized in that**
at least one deflection position is provided in the outflow passage system (52, 54) that forces a change of direction, in particular by approximately 90°, on the gas flowing to the filter unit (50).

15. A gas generator in accordance with claim 14,
**characterized in that**
at least one impact surface (55) extending approximately perpendicular to the flow direction of the gas to be redirected is provided at the deflection position.

16. A gas generator in accordance with one of the preceding claims,
**characterized in that**
a central outflow passage (52) extends substantially over the total axial length of the filter housing (56) and is surrounded by a filter unit (50) in the region of the upper end wall of the filter housing (56).

17. A gas generator in accordance with one of the preceding claims,
**characterized in that**
the filter housing (56) is formed as an outer housing of a generator.

18. A gas generator in accordance with one of the preceding claims,
**characterized in that**
the filter housing (56) has a securing flange (44) for attachment to the airbag module.

19. A gas generator in accordance with one of the preceding claims,
**characterized in that**
the filter housing (56) surrounds the generator stages (20, 30) in the manner of a clamp.

20. A gas generator in accordance with one of the preceding claims,
**characterized in that**
the filter housing (56) is secured to the pressure housings (26, 36) of the generator stages (20, 30) by a reshaping operation, in particular by a rolled joint or by a beaded joint.

21. A gas generator in accordance with one of the preceding claims,
**characterized in that**
outflow openings (58) of the filter housing (56) are provided at the level of the filter unit (50).

22. A gas generator in accordance with one of the preceding claims,
**characterized in that**
the filter housing (56) is formed in an expandable manner in particular to assist a pressure buffer function by the gas pressure which can be generated by means of the generator stages (20, 30).

23. A gas generator in accordance with one of the preceding claims,
**characterized in that**
the pressure housings (26, 36) of the generator stages (20, 30) are each welded to a base plate (46, 46'), in particular using a laser welding process or a capacitor discharge welding process.

24. A gas generator in accordance with one of the preceding claims,
**characterized in that**
base plates (46, 46') or a common base plate of the pressure housings (26, 36) or generator stages (20, 30) form a rim projecting in the radial direction.

## Revendications

1. Générateur de gaz, en particulier pour des modules d'airbag dans des véhicules automobiles, comprenant plusieurs étages de générateur séparés, capables d'être allumés et manipulés indépendamment les uns des autres (20, 30), qui comprennent respectivement, dans un boîtier à pression (26, 36) propre séparé, au moins un dispositif d'allumage (22, 32), au moins une charge propulsive, et au moins une chambre de combustion (24, 34),
dans lequel les étages de générateur (20, 30) sont agencés au moins partiellement conjointement avec une unité de filtre commune (50) dans un boîtier de filtre (56) commun,
et l'espace demeurant dans le boîtier de filtre (56) est réalisé au moins localement comme un système de canaux d'écoulement (52, 52', 54) qui mènent depuis des ouvertures d'écoulement (28, 38), réalisées dans les boîtiers à pression (26, 36), à l'unité de filtre (50),
**caractérisé en ce que**
les deux boîtiers à pression (26, 36) sont agencés l'un à côté de l'autre dans le boîtier de filtre (56) de telle façon qu'un canal d'écoulement (52) est formé par un espace libre qui demeure entre des parois latérales tournées l'une vers l'autre des deux boîtiers à pression (26, 36), et **en ce que** les deux boîtiers à pression (26, 36) sont appliqués avec leurs parois extérieures du côté périphérique contre le boîtier de filtre (56).

2. Générateur de gaz selon la revendication 1,
**caractérisé en ce qu'**il est prévu exactement deux étages de générateur (20, 30) de taille différente.

3. Générateur de gaz selon la revendication 1 ou 2,
**caractérisé en ce que** les étages de générateur individuels (20, 30) sont agencés l'un à côté de l'autre.

4. Générateur de gaz selon l'une des revendications précédentes, **caractérisé en ce que**, en section transversale, les étages de générateur (20, 30) remplissent au moins en grande partie le boîtier de filtre (56), et un contour extérieur des étages de générateur est au moins localement complémentaire d'un contour intérieur du boîtier de filtre (56).

5. Générateur de gaz selon l'une des revendications précédentes, **caractérisé en ce que** deux étages de générateur (20, 30) ayant chacun une section transversale sensiblement en forme de demi-cercle sont agencés dans un boîtier de filtre (56) avec une section transversale sensiblement de forme circulaire.

6. Générateur de gaz selon l'une des revendications précédentes, **caractérisé en ce que** les étages de générateur (20, 30) possèdent chacun une section transversale sous la forme d'un segment de cercle ou d'un segment d'anneau.

7. Générateur de gaz selon l'une des revendications précédentes, **caractérisé en ce que** les étages de générateur (20, 30) forment un anneau fermé, au centre duquel est prévu le canal d'écoulement commun (52).

8. Générateur de gaz selon l'une des revendications précédentes, **caractérisé en ce que** l'unité de filtre (50) est agencée au-dessus des ouvertures d'écoulement (28, 38).

9. Générateur de gaz selon l'une des revendications précédentes, **caractérisé en ce que** l'unité de filtre (50) est agencée au moins sensiblement entre les étages de générateur (20, 30).

10. Générateur de gaz selon l'une des revendications précédentes, **caractérisé en ce que** l'unité de filtre (50) entoure au moins localement les étages de générateur (20, 30).

11. Générateur de gaz selon l'une des revendications précédentes,
**caractérisé en ce que** l'unité de filtre (50) est agencée au-dessus des étages de générateur (20, 30).

12. Générateur de gaz selon l'une des revendications précédentes,
**caractérisé en ce que** l'unité de filtre (50) est réalisée sous forme annulaire.

13. Générateur de gaz selon l'une des revendications précédentes,
**caractérisé en ce que** les ouvertures d'écoulement (28, 38) sont réalisés dans une région inférieure des boîtiers à pression (26, 36).

14. Générateur de gaz selon l'une des revendications précédentes,
**caractérisé en ce qu'**il est prévu dans le système de canaux d'écoulement (52, 54) au moins un emplacement d'inflexion qui contraint le gaz en écoulement vers l'unité de filtre (50) à subir une modification de direction, en particulier d'environ 90°.

15. Générateur de gaz selon la revendication 14,
**caractérisé en ce qu'**il est prévu à l'emplacement d'inflexion au moins une surface d'impact (55) qui s'étend approximativement perpendiculairement à la direction d'écoulement du gaz à dévier.

16. Générateur de gaz selon l'une des revendications précédentes,
**caractérisé en ce qu'**un canal d'écoulement central (52) s'étend sensiblement sur la totalité de la longueur axiale du boîtier de filtre (56), et est entouré par une unité de filtre (50) dans la région de la paroi terminale supérieure du boîtier de filtre (56).

17. Générateur de gaz selon l'une des revendications précédentes,
**caractérisé en ce que** le boîtier de filtre (56) est réalisé sous forme de boîtier extérieur de générateur.

18. Générateur de gaz selon l'une des revendications précédentes,
**caractérisé en ce que** le boîtier de filtre (56) comprend une bride de fixation (44) pour la fixation sur le module d'airbag.

19. Générateur de gaz selon l'une des revendications précédentes,
**caractérisé en ce que** le boîtier de filtre (56) entoure les étages de générateur (20, 30) à la manière d'une pince.

20. Générateur de gaz selon l'une des revendications précédentes,
**caractérisé en ce que** le boîtier de filtre (56) est fixé sur les boîtiers à pression (26, 36) des étages de générateur (20, 30) par un élément déformé, en particulier un élément galeté ou un rabattement.

21. Générateur de gaz selon l'une des revendications précédentes,
**caractérisé en ce que** les ouvertures d'écoulement (58) du boîtier de filtre (56) sont prévues à la hauteur de l'unité de filtre (50).

22. Générateur de gaz selon l'une des revendications précédentes,
**caractérisé en ce que** le boîtier de filtre (56) est réalisé de façon extensible, en particulier pour assister une fonction de tampon de pression par la pression du gaz susceptible d'être engendré au moyen des étages de générateur (20, 30).

23. Générateur de gaz selon l'une des revendications précédentes,
**caractérisé en ce que** les boîtiers à pression (26, 36) des étages de générateur (20, 30) sont soudés respectivement avec une plaque de fond (46, 46'), en particulier en utilisant un procédé de soudage au laser ou un procédé de soudage à décharge de condensateur.

24. Générateur de gaz selon l'une des revendications précédentes,
**caractérisé en ce que** des plaques de fond (46, 46'), ou une plaque de fond commune des boîtiers à pression (26, 36) ou respectivement des étages de générateur (20, 30) forme(nt) une bordure en dépassement en direction radiale.
